# EUROPÄISCHE PATENTANMELDUNG

(11) **EP 3 920 397 A1**
(43) Veröffentlichungstag der Anmeldung: **08.12.2021**
(21) Anmeldenummer: 20177953.5
(22) Anmeldetag: 03.06.2020
(51) Int. Cl.: H02M 3/156

(54) **VERFAHREN ZUR REGELUNG EINES GLEICHSPANNUNGSWANDLER**

(71) Anmelder: Siemens Aktiengesellschaft, 80333 München (DE)
(72) Erfinder: Muhr, Hannes, 2463 Gallbrunn (AT); Demoulin, Harald, 2340 Mödling (AT); Spandl, Manfred, 1180 Wien (AT)
(74) Vertreter: Maier, Daniel Oliver

(57) **Zusammenfassung**

Die Erfindung betrifft ein Verfahren zur Regelung eines Gleichspannungswandlers (DC), welcher zumindest ein taktendes Schaltelement aufweist und eine Eingangsspannung (Ue) in eine geregelte Ausgangsspannung (Ua) umwandelt, wobei eine Stellgröße (SG) einer Reglereinheit (RE) zur Regelung der Ausgangsspannung (Ua) dazu verwendet wird, um ein Steuersignal (S) zur Ansteuerung (AS) des zumindest eine taktenden Schaltelements abzuleiten (105). Der Gleichspannungswandler (DC) kann in Abhängigkeit von der Eingangs- und Ausgangsspannung (Ue, Ua) bzw. einem Übertragungsverhältnis zwischen Eingangs- und Ausgangsspannung (Ue, Ua) zumindest zwei unterschiedliche Betriebszustände annehmen. Wird ein Übergangs bzw. Zustandswechsel (SC) von einem ersten auf einen zweiten Betriebszustand der zumindest zwei unterschiedlichen Betriebszustände des Gleichspannungswandlers (DC) festgestellt (101), werden beim festgestellten Zustandswechsel (SC) Abweichungen zwischen der Stellgröße (SG) vor dem jeweils festgestellten Zustandswechsel (SC) und der Stellgröße (SG) nach dem jeweils festgestellten Zustandswechsel (SC) ermittelt und gespeichert (102). Aus den ermittelten Abweichungen wird ein jeweils aktueller Korrekturfaktor (K) abgeleitet (103), welche für die Ermittlung einer kompensierten Stellgröße (SGcomp) verwendet wird (104). Für die kompensierte Stellgröße (SGcomp) wird die jeweils aktuelle Stellgröße (SG) bzw. ein jeweils aktueller Wert der Stellgröße (SG), welcher von der Reglereinheit (RE) laufend zur Verfügung gestellt wird, unter Verwendung des jeweils aktuell ermittelten Korrekturfaktors (K) korrigiert, bis ein neuerlicher Zustandswechsel festgestellt wird (101).

## Beschreibung

### Technisches Gebiet

Die gegenständliche Erfindung betrifft allgemein das Gebiet der Elektrotechnik, insbesondere den Bereich der Leistungselektronik sowie leistungselektronischer Schaltungen. Im Speziellen bezieht sich die vorliegende Erfindung auf ein Verfahren zur Regelung eines Gleichspannungswandlers, welcher zumindest ein taktendes Schaltelement aufweist und eine Eingangsspannung in eine geregelte Ausgangsspannung umwandelt, wobei eine Stellgröße einer Reglereinheit zur Regelung der Ausgangsspannung dazu verwendet wird, um ein Steuersignal zur Ansteuerung des zumindest eine taktenden Schaltelements abzuleiten. Weiterhin kann der Gleichspannungswandler in Abhängigkeit von der Eingangs- und Ausgangsspannung bzw. einem Übertragungsverhältnis zwischen Eingangs- und Ausgangsspannung des Gleichspannungswandlers zumindest zwei unterschiedliche Betriebszustände annehmen.

### Stand der Technik

Heutzutage sind Gleichspannungswandler, auch DC-DC-Wandler genannt, Bestandteil von vielen elektronischen Geräten. DC-DC-Wandler werden auch in vielen Bereichen, wie z.B. Automatisierung des Industriebereichs, Automotivbereich, etc., beim Betrieb von bzw. zur Stromversorgung von vielen elektrischen Produkten (z.B. Steuergeräte, Antrieben, etc.) oder Anlagen eingesetzt.

Ein Gleichspannungswandler bzw. DC-DC-Wandler stellt üblicherweise eine elektrische Schaltung dar, durch welche eine am Eingang anliegende (meist unstabilisierte bzw. schwankende) Gleichspannung (z.B. eine gleichgerichtete Wechselspannung, Gleichspannung aus einem Batteriemodul, etc.) in eine konstante und häufig vorgegebene Gleichspannung am Ausgang (= Ausgangsspannung) umgewandelt wird. Diese konstante Ausgangsspannung wird von einer Last bzw. einem Verbraucher (z.B. Antrieb, Motor, Steuergerät, etc.) zur Energieversorgung benötigt und kann ein niedrigeres, gleiches, höheres oder gegebenenfalls auch invertiertes Spannungsniveau als die am Eingang zugeführte Spannung bzw. als die Eingangsspannung aufweisen. Die Konstanz der Ausgangsspannung und/oder des Ausgangsstromes zur Versorgung der Last wird dabei durch Steuerung und Regelung des Energieflusses im Wandler bzw. in die Last erzielt. Vor allem im höheren Leistungsbereich geht es primär auch um eine möglichst verlustfreie Konvertierung.

Je nach Erfordernissen gibt es eine Vielzahl an Wandlertopologien für Gleichspannungswandler, welche üblicherweise durch eine geeignete Kombination eines Energiespeichers, insbesondere eines induktiven Energiespeichers (z.B. Spule, Drossel, Transformator), mit aktiven bzw. passiven Schaltelementen (z.B. Halbleiterschaltelemente, Transistoren, Dioden, etc.) realisiert sind. Eine grundlegende Funktionsweise eines Gleichspannungswandler besteht darin, dass eine am Eingang anliegende Gleichspannung durch periodisches Öffnen und Schließen (d.h. durch periodisches Takten) zumindest eines Schaltelements (z.B. Transistor) beispielsweise in eine rechteckförmige Wechselspannung transformiert wird. Durch eine anschließende Filterung (z.B. eine Kombination aus Induktivität und Kapazität) bzw. mit Hilfe eines (meist induktiven) Energiespeichers wird diese Wechselspannung wieder in eine Gleichspannung mit einem zum Eingang abweichenden, vorgegebenen Spannungsniveau am Ausgangs des Wandlers zurückgewandelt. Die Energie wird üblicherweise über den Energiespeicherstrom, insbesondere den Strom über die Induktivität, übertragen.

Das Übertragungsverhältnis zwischen Eingangsspannung und Ausgangsspannung und damit die Ausgangsspannung wird dabei üblicherweise von einem Pulsbreitenfaktor bzw. einem Tastverhältnis des zumindest eine taktenden Schaltelements geregelt. Der Pulsbreitenfaktor kann dabei als Division einer Einschaltdauer geteilt durch eine Ausschaltdauer des Schaltelements definiert werden. Unter Tastverhältnis des taktenden Schaltelements wird üblicherweise die Einschaltdauer im Verhältnis zur gesamten Periodendauer eines Schaltzyklus des Schaltelements (d.h. zur Summe aus Einschalt- und Ausschaltdauer) verstanden. Der Pulsbreitenfaktor bzw. das Tastverhältnis kann beispielsweise als Stellgröße für die Regelung der Ausgangsspannung verwendet werden, um daraus ein Steuersignal bzw. eine Ansteuerung für das zumindest eine taktende Schaltelement des Gleichspannungswandlers abzuleiten.

Einige Gleichspannungswandlertypen können beispielsweise in Abhängigkeit vom Übertragungsverhältnis zwischen der Eingangs- und der Ausgangsspannung unterschiedliche Betriebszustände annehmen. Ein derartiger Gleichspannungswandler ist z.B. ein sogenannter Tief-Hochsetzsteller, welcher auch als Abwärts-Aufwärtswandler oder Buck-Boost-Konverter bezeichnet wird und - je nach Anwendungsfall - eine Ausgangsspannung größer, gleich und/oder kleiner als eine Eingangsspannung liefern kann. Beim Tief-Hochsetzsteller ist beispielsweise einem Tiefsetzsteller bzw. Buck-Konverter ein Hochsetzsteller bzw. Boost-Konverter nachgeschaltet, wobei sowohl der Tiefsetzstellerteil als auch der Hochsetzstellerteil des Buck-Boost-Konverters zumindest ein taktendes Schaltelement aufweisen können. Beispielhafte Schaltungen eines Buck-Boost-Konverters bzw. Tief-Hochsetzstellers sind z.B. aus den Schriften EP 2 188 886 B1 oder EP 2 479 878 B1 bekannt.

In Abhängigkeit vom Verhältnis zwischen Eingangs- und Ausgangsspannung kann z.B. der Buck-Boost-Konverter in unterschiedlichen Betriebszuständen betrieben werden. Ist beispielsweise die Eingangsspannung wesentlich größer als die Ausgangsspannung, so wird der Tief-Hochsetzsteller meist im so genannten Tiefsetzer- bzw. Buck-Modus betrieben. Im Buck-Modus wird beispielsweise nur das Schaltelement des Tiefsetzstellers geschaltet, während das Schaltelement des Hochsetzstellers konstant ausgeschaltet bleibt. Nimmt eine Differenzspannung zwischen Eingangs- und Ausgangsspannung des Buck-Boost-Konverter z.B. aufgrund dynamischer Vorgänge (z.B. Schwankungen der Eingangsspannung und/oder Laständerungen) ab, so wird der Buck-Boost-Konverter üblicherweise im so genannten Mischbetrieb betrieben. D.h. es werden beispielsweise beide Schaltelemente des Buck-Boost-Konverters mit unterschiedlichem Tastverhältnis geschaltet. Weiterhin kann der Buck-Boost-Konverter in einem so genannten Boost-Modus betrieben werden, wenn z.B. die Eingangsspannung unter die Ausgangsspannung sinkt. Im Boost-Modus ist das Schaltelement des Tiefsetzstellers permanent eingeschaltet, während das Schaltelement des Hochsetzstellers getaktet wird.

Eine Regelung der Ausgangsspannung bzw. eine Steuerung des Übertragungsverhältnisses zwischen Eingangs- und Ausgangsspannung eines Gleichspannungswandlers wie z.B. dem Tief-Hochsetzsteller kann beispielsweise durch geeignete Einstellung des Tastverhältnis eines Steuersignals für das zumindest einen taktenden Schaltelements z.B. mit Hilfe eines übergeordneten Regelkreises erfolgen. Das bedeutet, die Regelung eines Gleichspannungswandlers wie z.B. eines Buck-Boost-Konverter erfolgt üblicherweise durch entsprechende Taktung bzw. durch entsprechendes Ein- und Ausschalten des zumindest einen Schaltelements bzw. der Schaltelemente. Dabei müssen allerdings Einflüsse (z.B. variable bzw. schwankende Eingangsspannung, Laständerungen, Bauteilvarianzen, etc.) berücksichtigt werden.

Weiterhin weisen unterschiedliche Betriebszustände des Gleichspannungswandlers - wie z.B. beim Buck-Boost-Konverter der Buck-Modus, der Mischbetrieb, Boost-Modus, etc. - zumeist unterschiedliche, nicht-lineare Übertragungsfunktionen auf, welche vor allem bei einer optimalen und möglichst verlustfreien Regelung der Ausgangsspannung z.B. bereits von einer Reglereinheit des übergeordneten Regelkreises berücksichtigt werden müssen. Dabei können speziell an den Übergängen zwischen den unterschiedlichen Betriebszuständen - beim Buck-Boost-Konverter z.B. vom Buck-Modus auf den Mischbetrieb oder umgekehrt -Unstetigkeiten auftreten, welche - abhängig vom jeweiligen Einsatzfall - periodische Schwingungen im Regelkreis bedingen können, welche nachteilige Auswirkungen auf das Gesamtsystem - d.h. Gleichspannungswandler und übergeordneten Regelkreis - haben können.

Ein Möglichkeit, die Eigenschaften des übergeordneten Regelkreises zu verbessern, stellt beispielsweise ein Einsatz von so genannte Kompensatoren dar, welche z.B. die durch den Gleichspannungswandler als Regelstrecke in den Regelkreis eingebrachten Nicht-Linearitäten im Anschluss an die Reglereinheit kompensieren. Dabei können z.B. für die jeweiligen Betriebszustände des Gleichspannungswandlers unterschiedliche Kompensatoren eingesetzt werden. Der Einsatz vom Kompensatoren hat allerdings den Nachteil, dass vor allem beim Übergang zwischen den unterschiedlichen Betriebszuständen - d.h. bei einem Betriebszustandswechsel - des Gleichspannungswandlers weiterhin und/oder zusätzlich Unstetigkeiten auftreten. Diese Unstetigkeiten werden beispielsweise durch produktionstechnische Varianzen in der Ansteuerelektronik (z.B. Reglereinheit, Kompensatoren) und der Regelstrecke (d.h. im Gleichspannungswandler) hervorgerufen. Insbesondere kann auch die unstetige Gesamtübertragungsfunktion des Gleichspannungswandlers, welche durch die unterschiedlichen, meist nicht-linearen Übertragungsfunktionen der unterschiedlichen Betriebszustände gebildet wird, nur schwer bzw. nicht vollkommen analytisch erfasst werden. Damit können sich z.B. Sprünge in der Stellgröße ergeben, welche zur Regelung der Ausgangsspannung des Gleichspannungswandlers herangezogen wird. Diese Sprünge können unterschiedlichste negative Auswirkungen auf die Eigenschaften (z.B. Wirkungsgrad, mechanische Schwingungen im hörbaren Bereich, etc.) des Gesamtsystems - d.h. Gleichspannungswandler und übergeordneten Regelkreis - haben.

### Darstellung der Erfindung

Der Erfindung liegt daher die Aufgabe zugrunde, ein Verfahren zur Regelung eines Gleichspannungswandlers mit zumindest einen taktenden Schaltelement anzugeben, durch welches auf einfache Weise eine weitere Verbesserung des Verhaltens des Gesamtregelkreises, insbesondere bei Übergängen zwischen unterschiedlichen Betriebszuständen des Gleichspannungswandlers, erzielt und negative Auswirkungen durch Unstetigkeiten, etc. reduziert werden.

Diese Aufgabe wird durch ein Verfahren gemäß dem unabhängigen Anspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zur Regelung eines Gleichspannungswandlers mit zumindest einem taktenden Schaltelement, von welchem eine zumeist unstabilisierte Eingangsspannung in einen geregelte Ausgangsspannung umgewandelt wird. Dabei wird eine Stellgröße einer Reglereinheit zur Regelung der Ausgangsspannung dazu verwendet, ein Steuersignal für einen Ansteuerung des zumindest einen taktenden Schaltelements des Gleichspannungswandlers abzuleiten. Weiterhin kann der Gleichspannungswandler in Abhängigkeit von der Eingangs- und Ausgangsspannung bzw. von einem Übertragungsverhältnis zwischen Eingangs- und Ausgangsspannung zumindest zwei oder mehrere unterschiedliche Betriebszustände annehmen.

Für das erfindungsgemäßen Regelungsverfahren eines Gleichspannungswandlers ist weiterhin vorgesehen, dass ein Übergang von einem aktuellen Betriebszustand des Gleichspannungswandler (z.B. Tiefsetzer-Modus bei einem Buck-Boost-Konverter) in einen anderen, neuen Betriebszustand (z.B. Mischbetrieb bei einem Buck-Boost-Konverter) der zumindest zwei unterschiedlichen Betriebszustände des Gleichspannungswandlers erkannt wird. D.h. ein Zustandswechsel von einem aktuellen, ersten Betriebszustand auf einen anderen, weiteren bzw. zweiten Betriebszustand der unterschiedlichen Betriebszustände des Gleichspannungswandlers wird festgestellt. Bei diesem Zustandswechsel werden Abweichungen des Wertes der Stellgröße nach dem Zustandswechsel vom Wert der Stellgröße vor dem Zustandswechsel bestimmt und abgespeichert. D.h., es wird die z.B. sprungartige Veränderung der Stellgröße beim Zustandswechsel z.B. aufgrund der unstetigen Gesamtübertragungsfunktion des Gesamtregelkreises ermittelt und die Abweichungen der Stellgröße von einer idealen Kennlinie der Gesamtübertragungsfunktion (d.h. ohne "Sprung" der Stellgröße beim jeweiligen Zustandswechsel) aufgezeichnet. Aus den ermittelten und gespeicherten Abweichungen wird dann ein jeweils aktueller Korrekturfaktor ermittelt, welche für die Ermittlung einer kompensierten Stellgröße verwendet wird. Dazu wird die jeweils aktuelle Stellgröße bzw. ein jeweils aktueller Wert der Stellgröße, welcher von der Reglereinheit zur Verfügung gestellt wird, unter Verwendung des jeweils aktuell ermittelten Korrekturfaktors laufend korrigiert, bis ein neuerlicher Zustandswechsel festgestellt wird.

Der Hauptaspekt der erfindungsgemäß vorgeschlagenen Lösung besteht darin, dass bei einem Zustandswechsel eines Gleichspannungswandlers von einem Betriebszustand auf einen anderen Betriebszustand Abweichungen der Stellgröße von einer optimalen bzw. idealen Kennlinie (d.h. ohne "Sprünge" bzw. Unstetigkeiten) bestimmt werden. In der Folge wird die Stellgröße laufend korrigiert und damit an die optimale bzw. ideale Kennlinie der Gesamtübertragungsfunktion des Regelkreises bzw. an die Übertragungsfunktion des aktuellen Betriebszustands des Gleichspannungswandlers nach dem Zustandswechsel angepasst. Dies hat eine Verbesserung des Verhaltens des Gesamtregelkreises - zumindest umfassend die Reglereinheit und des Gleichspannungswandler als Regelstrecke - zur Folge, da die Regelung mit einer geringeren Anzahl an störenden Regelgrößen (z.B. Unstetigkeiten, produktionstechnische Varianzen der Bauteile, etc.) beaufschlagt wird. Weiterhin sorgt eine verbesserte Regelung des Gleichspannungswandler bzw. der Ausgangsspannung des Gleichspannungswandlers auch für einen Verbesserung des Wirkungsgrads. Zusätzlich können beispielsweise störende mechanische Schwingungen, insbesondere im hörbaren Bereich, und/oder akustische Auswirkungen einer periodischen Netzspannung (z.B. bei einem netzgeführten Betrieb) reduziert und/oder vermieden werden.

Idealerweise wird für die Ermittlung des jeweils aktuellen Korrekturfaktors eine Filterung vorgenommen, um eine bessere Anpassung der jeweils aktuellen Stellgröße an die Übertragungsfunktion des jeweils aktuellen Betriebszustand des Gleichspannungswandlers zu ermöglichen. Dazu wird eine vorgegebene Anzahl an Abweichungen verwendet, welche für einen gleichartigen Zustandswechsel wie den aktuell festgestellten Zustandswechsel ermittelt und gespeichert wurden. D.h., es werden beispielsweise die Abweichungen für auftretenden Zustandswechsel von einem ersten Betriebszustand des Gleichspannungswandlers (z.B. Buck-Modus) auf einen zweiten Betriebszustand des Gleichspannungswandlers (z.B. Mischbetrieb) ermittelt und gespeichert. Tritt wieder ein derartiger Zustandswechsel auf, wird eine vorgegebenen Anzahl der zuletzt gespeicherten Abweichungen für die Ermittlung des entsprechenden Korrekturfaktors verwendet.

Bei der Verwendung einer vorgegebenen Anzahl an für einen Zustandswechsel ermittelten Abweichungen ist es günstig, wenn für die Ermittlung des Korrekturfaktors beispielsweise ein arithmetisches Mittel oder ein gewichtetes arithmetisches Mittel aus den ermittelten Abweichungen gebildet wird. Der Korrekturfaktor kann dann z.B. als Mittelwert aus der vorgegebenen Anzahl an den ermittelten Abweichungen bestimmt werden, um z.B. Ungenauigkeiten und/oder statische Abweichungen bei der Ermittlung der Abweichungen auszugleichen. Alternativ oder zusätzlich, können die gespeicherten Abweichungen z.B. auch je nach Ermittlungszeitpunkt gewichtet werden. So können bespielweise früher ermittelte und gespeicherte bzw. ältere Abweichungen mit einer niedrigeren Gewichtung versehen werden als aktueller bzw. neuer Abweichungen des jeweiligen Zustandswechsel. Aus der Anzahl an entsprechende gewichteten Abweichungen kann für den Korrekturfaktor z.B. ein gewichteter arithmetischer Mittelwert berechnet werden, in welchen z.B. ältere Abweichungen weniger einfließen als neuer Abweichungen.

Alternativ kann es auch günstig sein, wenn als Filterung bei der Ermittlung des Korrekturfaktors aus einer vorgegebenen Anzahl an ermittelten Abweichungen für gleichartige Zustandswechsel beispielsweise eine Tiefpass-Filterung eingesetzt wird. Durch eine Tiefpass-Filterung können z.B. sehr einfach z.B. fehlerhaft ermittelte Abweichungen oberhalb eines vorgegebenen Grenzwertes weggefiltert werden. Für die Umsetzung der Filterung können beispielsweise so genannte Infinite Impuls Response-Filter (IIR-Filter) eingesetzt werden, welche sehr einfach sehr einfach z.B. in digitalen Signalprozessoren oder in digitaler Hardware (z.B. FPGAs, ASICs, etc.) realisiert werden können.

Es ist weiterhin vorteilhaft, wenn der Korrekturfaktor für die Ermittlung der kompensierten Stellgröße zumindest einen Offset-Wert und/oder Parameter für eine Anpassung an eine optimale Übertragungsfunktion des jeweils aktuellen Betriebszustands des Gleichspannungswandler umfasst. Auf diese Weise kann die von der Reglereinheit aktuell gelieferte Stellgröße optimal - d.h. entsprechend der jeweiligen Übertragungsfunktion des jeweiligen Betriebszustands - korrigiert werden. Die einfachste Form des Korrekturfaktors umfasst beispielsweise nur einen Offset-Wert, welcher für die Bildung der kompensierten Stellgröße z.B. zur jeweils aktuellen Stellgröße addiert wird. Für eine bessere bzw. genauere Korrektur der von der Reglereinheit aktuell gelieferten Stellgröße kann der Korrekturfaktor z.B. auch Parameter für eine Anpassung der Stellgröße an eine Steigung und/oder Krümmung der Übertragungsfunktion des jeweils aktuellen Betriebszustands des Gleichspannungswandlers umfassen. Dadurch können beispielsweise weitere Verbesserung im Regelkreisverhalten - vor allem bei Übergängen zwischen Betriebszuständen des Gleichspannungswandlers - erzielt werden.

Ein zweckmäßige Ausgestaltung der Erfindung sieht vor, dass für eine Durchführung des erfindungsgemäßen Regelungsverfahrens ein Analysemodul eingesetzt wird. Diese Analysemodul ist dazu eingerichtet, anhand zumindest der Eingangsspannung und der Ausgangsspannung des Gleichspannungswandlers Übergänge zwischen Betriebszuständen des Gleichspannungswandlers bzw. Zustandswechsel zur erkennen. Weiterhin wird dem Analysemodul von der Reglereinheit die jeweils aktuelle Stellgröße als Eingangsparameter zur Verfügung gestellt.

Idealerweise weist das Analysemodul zumindest eine Analysekomponente und eine Kompensationskomponente auf. Von der Analysekomponente werden beispielsweise Zustandswechsel erkannt und die Abweichungen der Stellgröße vor und nach dem jeweiligen Zustandswechsel ermittelt und analysiert. Weiterhin kann die Analysekomponente die ermittelten Abweichungen speichern, wobei die Speicherung z.B. in einer externen oder internen Speichereinheit erfolgen kann oder als Cloudbasierte Lösung ausgestaltet sein kann. Zusätzlich wird von der Analysekomponente der jeweils aktuelle Korrekturfaktor ermittelt und der Kompensationskomponente zur Verfügung gestellt. Von der Kompensationskomponente wird dann beispielsweise aus der jeweils aktuell von der Reglereinheit zur Verfügung gestellten Stellgröße und dem jeweils aktuellen Korrekturfaktor die kompensierte Stellgröße für die Ansteuerung des Gleichspannungswandlers bzw. des zumindest einen zugehörigen Schaltelements ermittelt.

Es ist dabei günstig, wenn das Analysemodul als digitale Schaltung unter Verwendung eines Mikrokontrollers bzw. in einem Mikrokontroller realisiert ist. In die digitale Schaltung kann beispielsweise die Reglereinheit und gegebenenfalls für die unterschiedlichen Betriebszustände des Gleichspannungswandlers verwendete Kompensatoren integriert sein. Das Analysemodul und die Reglereinheit mit den gegebenenfalls verwendeten Kompensatoren können beispielsweise in getrennten Mikrokontrollern oder in einem gemeinsamen Mikrokontroller realisiert sein.

Es ist von Vorteil, wenn als Stellgröße, welche von der Reglereinheit zur Verfügung gestellt wird, ein Tastverhältnis des zumindest einen Schaltelements verwendet wird. Durch eine Regelung des Tastverhältnisses bzw. einer Einschaltdauer des zumindest einen taktenden Schaltelements des Gleichspannungsreglers kann auf einfache Weise das Übertragungsverhältnis zwischen Eingangsspannung und Ausgangsspannung und damit die Ausgangsspannung des Gleichspannungswandlers geregelt werden. Insbesondere wenn als Stellgröße das Tastverhältnis des zumindest einen taktenden Schaltelements verwendet wird, kann sehr einfach von der jeweiligen kompensierten Stellgröße das Steuersignal für das zumindest eine taktende Schaltelement des Gleichspannungswandlers für den jeweils aktuellen Betriebszustand abgeleitet werden. Dabei gibt das Steuersignal dem zumindest einen Schaltelement die jeweils für den aktuellen Betriebszustand passenden Ein- und Ausschaltimpulse vor. Für die Ableitung des Steuersignals kann beispielsweise die so genannte Pulsweitenmodulation verwendet werden.

Eine bevorzugte Ausführungsform der Erfindung sieht vor, dass als Reglereinheit zur Regelung der Ausgangspannung des Gleichspannungswandlers ein Spannungsregler mit einer unterlagerten Stromregelung verwendet wird. Insbesondere wird von der Reglereinheit als Regelmethode die so genannte Average Current Mode Control eingesetzt. Dabei gibt ein Spannungsregler auf Basis eines Ist- und Sollwertes z.B. der Ausgangsspannung des Gleichspannungswandlers einem untergeordneten Stromregler einen mittleren Stromsollwert beispielsweise für einen Mittelwert eines Stroms durch den induktiven Energiespeicher (z.B. die Induktivität bzw. Drossel) des Gleichspannungswandlers vor. Vom untergeordneten Stromregler wird dann der Strom z.B. durch den induktiven Energiespeichers des Gleichspannungswandlers mittelbar oder unmittelbar erfasst und die Stellgröße erzeugt, welche zum Generieren des Steuersignals für das zumindest eine Schaltelement verwendet wird.

### Kurzbeschreibung der Zeichnung

Die Erfindung wird nachfolgend in beispielhafter Weise anhand der beigefügten Figuren erläutert. Es zeigen:
Figur 1 in schematischer und beispielhafter Weise ein System zur Durchführung des erfindungsgemäßen Verfahrens zur Regelung eines Gleichspannungswandlers mit unterschiedlichen Betriebszuständen
Figur 2 beispielhaft eine Anlauf des erfindungsgemäßen Verfahrens zur Regelung eines Gleichspannungswandlers

### Ausführung der Erfindung

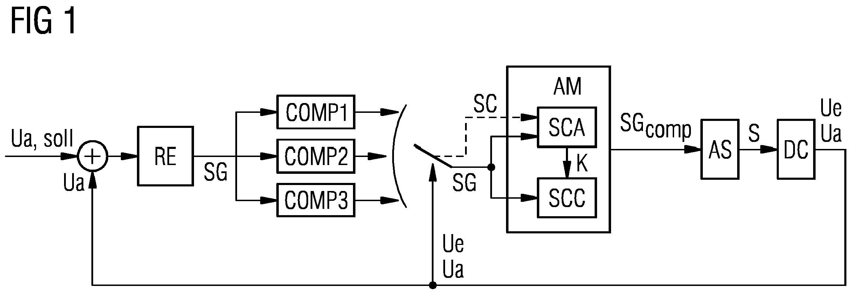

Figur 1 zeigt schematisch und beispielhaft ein System bzw. einen Gesamtregelkreis zur Durchführung des erfindungsgemäßen Verfahrens zur Regelung eines Gleichspannungswandlers DC, welcher zumindest ein taktendes Schaltelement aufweist, um eine meist unstabilisierte Eingangsspannung Ue in eine geregelte Ausgangsspannung Ua umzuwandeln. In Abhängigkeit von der Eingangsspannung Ue und der Ausgangsspannung Ua bzw. einem Übertragungsverhältnis zwischen Eingangs- und Ausgangsspannung Ue, Ua kann der Gleichspannungswandler (z.B. ein Tief-Hochsetzer) zumindest zwei unterschiedliche Betriebszustände (z.B. Buck-Modus, Mischbetrieb, Boost-Modus) annehmen kann, wobei diese Betriebszustände üblicherweise unterschiedliche, meist nicht-lineare Übertragungsfunktionen aufweisen. Daraus ergibt sich beispielsweise eine nicht-lineare Gesamtübertragungsfunktion, welche vor allem bei Übergängen zwischen den Betriebszuständen Unstetigkeiten aufweist.

Für die Regelung der Ausgangsspannung Ua z.B. auf einen vorgebbaren Sollwert Ua,soll wird das zumindest eine Schaltelement des Gleichspannungswandlers DC mittels eines Steuersignals S angesteuert. Das Steuersignal S - z.B. ein pulsweitenmodulierter und/oder frequenzmoduliertes Steuersignal - wird beispielsweise mittels einer Ansteuerung AS aus einer von einer Reglereinheit RE zur Verfügung gestellten Stellgröße SG abgeleitet. Als Stellgröße SG kann beispielsweise ein Tastverhältnis (d.h. ein Verhältnis einer Einschaltdauer zur einer Periodendauer eine Schaltzyklus bestehend aus einem Einschalten und einem Ausschalten des Schaltelements) des zumindest einen Schaltelements des Gleichspannungswandlers DC verwendet werden. Bei einem Tief-Hochsetzsteller, welcher beispielsweise zumindest zwei Schaltelemente (z.B. ein Schaltelement im Tiefsetzerteil und ein Schaltelement im Hochsetzerteil) aufweisen kann, die Tastverhältnisse der zumindest zwei Schaltelemente entsprechend geregelt.

Als Regelmethode kann beispielsweise die so genannte genannten Average Current Mode Control verwendet werden. Dabei wird eine Reglereinheit RE eingesetzt, welche z.B. als Spannungsregler mit einer unterlagerten Stromregelung ausgestaltet ist. Es wird einem untergeordneten Stromregler von einem Spannungsregler z.B. auf Basis eines vorgebbaren Sollwerts Ua,soll und der aktuellen Ausgangsspannung Ua des Gleichspannungswandlers DC ein mittlerer Stromsollwert - beispielsweise für einen Mittelwert eines Stroms durch den induktiven Energiespeicher (z.B. Induktivität, Drossel, etc.) - vorgegeben. Vom untergeordneten Stromregler wird dann ein Strom, wie z.B. der Strom durch den induktiven Energiespeicher des Gleichspannungswandlers, mittelbar oder unmittelbar erfasst und daraus die Stellgröße SG ermittelt.

Im Anschluss an die Reglereinheit RE können im Regelkreis eine oder mehrere Kompensatoren COMP1, COMP2, COMP3 vorgesehen sein. Die Kompensatoren COMP1, COMP2, COMP3 können die durch die Regelstrecke bzw. den Gleichspannungswandler DC eingebrachten Nichtlinearitäten und Abweichungen von der Übertragungsfunktion eines Betriebszustands kompensieren. Dabei kann in Abhängigkeit vom jeweiligen Betriebszustand des Gleichspannungswandlers DC ein eigner Kompensator COMP1, COMP2, COMP3 zur Anwendung kommen, durch welche die Stellgröße SG z.B. an eine Übertragungsfunktion des jeweiligen Betriebszustands des Gleichspannungswandlers DC angepasst und dadurch die Regelkreiseigenschaften verbessert werden.

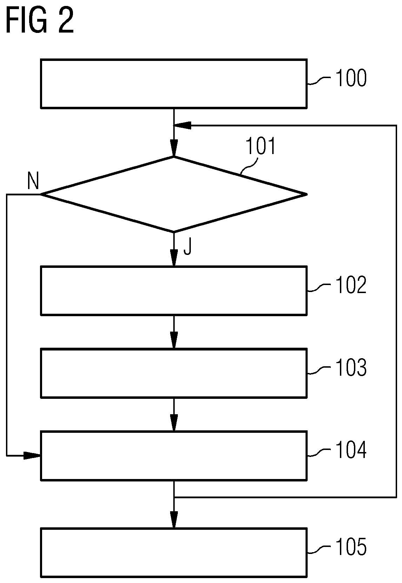

Für eine Durchführung des erfindungsgemäßen Regelverfahrens, welches in der Folge anhand von Figur 2 näher erläutert wird, ist im Regelkreis weiterhin ein Analysemodul AM vorgesehen, welchem von der Reglereinheit RE bzw. vom für den jeweiligen Betriebszustand verwendeten Kompensator COMP1, COMP2, COMP3 die jeweils aktuelle Stellgröße SG bzw. deren Wert zugeführt wird. Weiterhin ist das Analysemodul AM dazu eingerichtet, auf Basis der Eingangsspannung Ue und auf Basis der Ausgangsspannung Ua eine Zustandswechsel SC des Gleichspannungswandlers DC zu erkennen. Ein Zustandswechsel SC bezeichnet dabei einen Übergang von einem ersten bzw. jeweils aktuellen Betriebszustand des Gleichspannungswandlers DC auf einen zweiten bzw. anderen, neuen Betriebszustand des Gleichspannungswandlers DC. Die Zustandswechsel SC in Figur 1 sind beispielhaft bzw. symbolisch durch einen Schalter dargestellt.

Das Analysemodul AM kann beispielsweise als digitale Schaltung unter Verwendung eines Mikrokontrollers bzw. in einem Mikrokontroller realisiert sein. In diese digitale Schaltung können z.B. auch die Reglereinheit RE und gegebenenfalls vorhandene Kompensatoren COMP1, COMP2, COMP3 integriert sind. Alternativ können die Reglereinheit RE und die gegebenenfalls vorhandenen Kompensatoren COMP1, COMP2, COMP3 auch als eigene digitale Schaltung (z.B. Mikrokontroller, etc.) ausgeführt sein.

Weiterhin weist das Analysemodul AM zumindest eine Analysekomponente SCA und eine Kompensationskomponente SCC auf. Die Analysekomponente SCA kann beispielsweise anhand der Eingangs- und Ausgangsspannung Ue, Ua einen Zustandswechsel SC zwischen Betriebszuständen des Gleichspannungswandlers DC erkennen. Weiterhin kann die Analysekomponente SCA für einen festgestellten Zustandswechsel SC Abweichungen der Stellgröße SG (bzw. des Stellgrößenwerts) vor dem Zustandswechsel SC und der Stellgröße SG (bzw. des Stellgrößenwerts) nach dem Zustandswechsel SC ermitteln. D.h. von der Analysekomponente AM wird der "Sprung" der Stellgröße SG beim Zustandswechsel SC bestimmt, welcher aufgrund des Wechsels von der Übertragungsfunktion des ersten bzw. aktuellen Betriebszustands auf die Übertragungsfunktion des zweiten bzw. neuen Betriebszustands beim Zustandswechsel auftritt. Die ermittelten Abweichungen können von der Analysekomponenten SCA z.B. in einer internen oder externen Speichereinheit oder cloud-basiert beispielsweise gemeinsam mit dem jeweiligen Zustandswechsel abgespeichert werden. Auf Basis der ermittelten Abweichungen kann von der Analysekomponente SCA dann ein für den festgestellten Zustandswechsel aktueller Korrekturfaktor K ermittelt werden. Dabei können beispielsweise unterschiedliche Filterungen angewendet werden, um z.B. einen verbesserten Korrekturfaktor K zu erhalten bzw. um z.B. fehlerhafte

Der Kompensationskomponente SCC des Analysemoduls AM wird dann der jeweils aktuell Korrekturfaktor K von der Analysekomponente zur Verfügung gestellt. Die Kompensationskomponente ermittelt dann auf Basis des Korrekturfaktors K und der jeweils aktuellen Stellgröße SG, welche von der Reglereinheit RE - gegebenenfalls durch einen Kompensator COMP1, COMP2, COMP3 angepasst - zur Verfügung gestellt wird, eine kompensierte Stellgröße SGcomp. Die Kompensationskomponente SCC korrigiert die Stellgröße SG auf Basis des jeweils aktuellen Korrekturfaktors K solange, bis vom Analysemodul AM bzw. der Analysekomponente SCA ein neuerlicher Zustandswechsel SC festgestellt wird, für welchen dann ein neuer, aktueller Korrekturfaktor K bestimmt wird. Die vom Analysemodul AM bzw. der Kompensationskomponente SCC bestimmte kompensierte Stellgröße SG wird dann von der Ansteuerung AS verwendet, um ein entsprechendes Steuersignal S für das zumindest ein Schaltelement des Gleichspannungswandler DC beispielsweise mittels Pulsweitenmodulation abzuleiten.

In Figur 2 ist beispielhaft und schematisch ein Ablauf des erfindungsgemäßen Regelungsverfahren für einen Gleichspannungswandler DC mit zumindest einem Schaltelement dargestellt, welcher zumindest zwei unterschiedliche Betriebszustände annehmen kann. In einem Startschritt 100 befindet sich der Gleichspannungswandler DC z.B. nach einem Einschaltvorgang bzw. nach einem Hochfahren aufgrund der Eingangsspannung Ue und der geregelten Ausgangsspannung Ua in einem aktuellen, ersten Betriebszustand (z.B. im Buck-Modus oder im Mischbetrieb bei einem Tief-Hochsetzsteller) der zumindest zwei unterschiedlichen Betriebszustände. Das zumindest eine taktende Schaltelement des Gleichspannungswandlers DC wird entsprechend dem aktuellen Betriebszustand vom Steuersignal S angesteuert, wobei das Steuersignal S aus der Stellgröße SG der Reglereinheit abgeleitet wird.

Treten Veränderungen bei der Eingangs- und/oder der Ausgangsspannung Ue, Ua des Gleichspannungswandler z.B. Schwankungen bei der Eingangsspannung Ue, Schwankungen bei der Last des Gleichspannungswandlers DC, etc., dann kann es zu einer Veränderung im Übertragungsverhältnis zwischen der Eingangs- und Ausgangsspannung Ue, Ua des Gleichspannungswandler DC kommen. Dadurch kann es zu einer Veränderung des Betriebszustands des Gleichspannungswandlers DC kommen. Ein Tief-Hochsetzsteller wechselt beispielsweise von Buck-Modus in den Mischbetrieb, wenn sich Eingangsspannung Ue und Ausgangsspannung Ua annähern bzw. ihr Verhältnis sich einem Wert von Eins nähert, oder z.B. vom Mischbetrieb in einen Boost-Modus, wenn die Eingangsspannung Ue unter die Ausgangsspannung Ua sinkt, oder von einem Mischbetrieb in den Buck-Modus, wenn die Eingangsspannung Ue einen meist wesentlich größeren Wert als die Ausgangsspannung Ua annimmt.

In einem Überprüfungsschritt 101 wird beispielsweise anhand der jeweils aktuellen Eingangs- und Ausgangsspannung Ue, Ua ein Zustandswechsel SC vom aktuellen bzw. ersten Betriebszustand des Gleichspannungswandlers DC in einen anderen, zweiten Betriebszustand des Gleichspannungswandlers DC erkannt. Der Zustandswechsel SC kann z.B. vom Analysemodul AM bzw. der zugehörigen Analysekomponente SCA festgestellt werden.

In einem Analyseschritt 102 werden dann z.B. von der Analysekomponente SCA des Analysemoduls AM Abweichungen der Stellgröße SG (bzw. des Stellgrößenwerts) vor dem Zustandswechsel SC und der Stellgröße SG (bzw. des Stellgrößenwerts) nach dem Zustandswechsel SC für den im Überprüfungsschritt 101 festgestellten Zustandswechsel SC ermitteln. Weiterhin werden die ermittelten Abweichungen abgespeichert. Dabei können die Abweichungen beispielsweise mit einer Angabe über den jeweiligen Zustandswechsel SC (z.B. Wechsel von Buck-Modus auf Mischbetrieb, Wechsel von Mischbetrieb auf Buck-Modus, etc.) und z.B. einen Zeitstempel oder einer fortlaufenden Nummer, etc. versehen werden. Auf diese Weise können Abfolgen von z.B. gleichartigen Zustandswechsel SC sehr einfach gespeichert werden. Dabei kann beispielsweise eine Anzahl an Abweichungen für gleichartige Zustandswechsel SC, welche aktuell gespeichert werden, vorgegeben werden, so dass z.B. nur die vorgegebene Anzahl an aktuell ermittelten Abweichungen je gleichartigen Zustandswechsel SC gespeichert sind. Die gespeicherten Abfolgen an gleichartigen Zustandswechsel SC können z.B. für eine Auswertung und/oder Filterung genutzt werden. Die Abspeicherung kann z.B. in einer internen Speichereinheit des Analysemoduls AM, einer externen Speichereinheit oder cloudbasiert erfolgen.

In einem Ermittlungsschritt 103 wird dann aus den ermittelten und abgespeicherten Abweichungen ein jeweils aktueller Korrekturfaktor K ermittelt. Für die Ermittlung des Korrekturfaktors K werden z.B. die im Analyseschritt 102 aktuell ermittelten Abweichungen verwendet. D.h. im einfachsten Fall wird der Korrekturfaktor K direkt aus den im Analyseschritt 102 bestimmten und gespeicherten Abweichungen ermittelt. Es ist aber auch möglich, dass bei der Ermittlung des Korrekturfaktor K eine Filterung durchgeführt wird. Dazu kann - sofern vorhanden - die gespeicherte Abfolge bzw. eine vorgegebene Anzahl an Abweichungen verwendet werden, welche für gleichartige Zustandswechsel SC wie dem aktuell im Prüfschritt 101 festgestellten Zustandswechsel SC gespeichert wurden. Als Filterungsmethoden können beispielsweise die Bildung eines arithmetischen Mittels oder eines gewichteten arithmetischen Mittels oder eine Tiefpass-Filterung der vorgegebenen Anzahl an gespeicherten Abweichungen verwendet werden, um den jeweils aktuellen Korrekturfaktor K aus den Stellgrößen-Abweichungen beim aktuell festgestellten Zustandswechsel abzuleiten. Der Korrekturfaktor K kann z.B. einen Vektor- oder Matrixform aufweisen und beispielsweise einen Offset-Wert und/oder Parameter für einen Anpassung an eine optimale Übertragungsfunktion des jeweils aktuellen Betriebszustands des Gleichspannungswandlers DC an dem aktuell festgestellten Zustandswechsel SC umfassen. Derartige Parameter können beispielsweise Angaben und Werte für eine Anpassung der Stellgröße SG an eine Steigung, Krümmung, etc. der optimalen Übertragungsfunktion umfassen. Im einfachsten Fall kann der Korrekturfaktor K aus einem eindimensionalen Vektor bzw. einem Offset-Wert bestehen, welche anhand der im Analyseschritt 102 ermittelten Abweichungen bestimmt wurde.

Der Korrekturfaktor K wird dann in einem Kompensationsschritt 104 zur Ermittlung der kompensierten Stellgröße SGcomp verwendet. Die kompensierte Stellgröße SGcomp wird auf Basis der von der Reglereinheit RE und den gegebenenfalls eingesetzten Kompensatoren COMP1, COMP2, COMP3 gelieferte, aktuelle Stellgröße SG und des jeweils aktuellen Korrekturfaktors K ermittelt. Dazu wird z.B. der jeweils aktuelle Korrekturfaktor K von der Analysekomponente SCA des Analysemoduls AM an die Kompensationskomponente SCC des Analysemoduls AM weitergeleitet. Die Korrektur der jeweils aktuellen Stellgröße SG mit dem jeweils aktuellen bzw. aktuell gültigen Korrekturfaktor K wird dabei laufend solange vorgenommen, bis im Überprüfungsschritt 102 z.B. anhand der Eingangs- und Ausgangsspannung Ue, Ua wieder ein (neuerlicher) Zustandswechsel SC bzw. eine Änderung des Betriebszustands des Gleichspannungswandlers DC festgestellt wird.

Solange kein neuerlicher Zustandswechsel SC festgestellt wird, wird die kompensierte Stellgröße SGcomp, welche im Kompensationsschritt 104 aus der jeweils aktuellen Stellgröße SG und dem aktuell gültigen Korrekturfaktor K laufend ermittelt wird, in einem Steuerungsschritt 105 für die Ableitung des Steuersignal S für das zumindest eine taktende Schaltelement des Gleichspannungswandlers verwendet. Das zumindest eine taktende Schaltelement wird damit entsprechend des aktuellen Betriebszustands angesteuert.

Wird im Überprüfungsschritt 102 ein neuerlicher Zustandswechsel SC des Gleichspannungswandlers DC festgestellt, so werden wieder der Analyseschritt 102 sowie der Ermittlungsschritt 103 durchlaufen, um für den neuerlichen Zustandswechsel einen neuen, aktuellen Korrekturfaktor K zu bestimmen. Dieser neue Korrekturfaktor K wird dann im Kompensationsschritt 104 zum Ermitteln einer neuen kompensierten Stellgröße SGcomp genutzt, um diese wieder an den nun mehr aktuellen Betriebszustand des Gleichspannungswandlers DC anzupassen und im Gesamtsystem für eine optimale Regelung zu sorgen.

## Patentansprüche

1. Verfahren zur Regelung eines Gleichspannungswandler (DC) mit zumindest einem taktenden Schaltelement zur Umwandlung einer Eingangsspannung (Ue) in eine geregelte Ausgangsspannung (Ua), wobei aus einer Stellgröße (SG) einer Reglereinheit (RE) zur Regelung der Ausgangsspannung (Ua) ein Steuersignal (S) zur Ansteuerung (AS) des zumindest eine taktenden Schaltelements abgeleitet wird (105), und wobei der Gleichspannungswandler (DC) in Abhängigkeit von der Eingangsspannung (Ue) und der Ausgangsspannung (Ua) zumindest zwei unterschiedliche Betriebszustände annehmen kann, ***dadurch gekennzeichnet, dass*** zumindest folgende Schritte ausgeführt werden:
- Feststellen eines Zustandswechsels (SC, 101) von einem ersten auf einen zweiten Betriebszustand der zumindest zwei unterschiedlichen Betriebszustände des Gleichspannungswandlers (DC);
- Ermitteln von Abweichungen zwischen der Stellgröße (SG) vor dem jeweils festgestellten Zustandswechsel (SC) und der Stellgröße (SG) nach dem jeweils festgestellten Zustandswechsel (SC) und Speichern der ermittelten Abweichungen beim festgestellten Zustandswechsel (SC, 102);
- Ermitteln eines jeweils aktuellen Korrekturfaktors (K) auf Basis der ermittelten Abweichungen (103);
- Ermitteln einer kompensierten Stellgröße (SGcomp '104), für welche die jeweils aktuelle Stellgröße (SG), welche von der Reglereinheit (RE) zur Verfügung gestellt wird, auf Basis des jeweils aktuellen Korrekturfaktors (K) bis zum Feststellen eines neuerlichen Zustandswechsels (SC ,101) laufend korrigiert wird.

2. Verfahren nach Anspruch 1, ***dadurch gekennzeichnet, dass*** für die Ermittlung des jeweils aktuellen Korrekturfaktors (K) eine vorgegebene Anzahl an Abweichungen verwendet wird (103), welche für gleichartige Zustandswechsel (SC) ermittelt und gespeichert wurden (102).

3. Verfahren nach Anspruch 2, ***dadurch gekennzeichnet, dass*** für die Ermittlung des Korrekturfaktor (K) ein arithmetisches Mittel oder ein gewichtetes arithmetisches Mittel aus der vorgegebenen Anzahl an gespeicherten Abweichungen gebildet wird (103).

4. Verfahren nach Anspruch 2, ***dadurch gekennzeichnet, dass*** der Korrekturfaktor (K) mittels Tiefpass-Filterung aus der vorgegebenen Anzahl an gespeicherten Abweichungen abgeleitet wird (103).

5. Verfahren nach einem der vorangegangenen Ansprüche, ***dadurch gekennzeichnet, dass*** vom Korrekturfaktor (K) für die Ermittlung der kompensierten Stellgröße (SGcomp) zumindest ein Offset-Wert und/oder Parameter für eine Anpassung an eine optimale Übertragungsfunktion des jeweils aktuellen Betriebszustands des Gleichspannungswandlers (DC) nach dem festgestellten Zustandswechsels (SC) umfasst werden.

6. Verfahren nach einem der vorangegangenen Ansprüche, ***dadurch gekennzeichnet, dass*** für eine Durchführung ein Analysemodul (AM) eingesetzt wird, welches dazu eingerichtet ist, auf Basis der Eingangsspannung (Ue) und der Ausgangsspannung (Ua) des Gleichspannungswandlers (DC) Zustandswechsel (SC) zu erkennen (101), und welchem von der Reglereinheit (RE) die jeweils aktuelle Stellgröße (SG) zur Verfügung gestellt wird.

7. Verfahren nach Anspruch 6, ***dadurch gekennzeichnet, dass*** vom Analysemodul (AM) zumindest eine Analysekomponente (SCA) zum Erkennen von Zustandswechsel (SC, 101) und zum Ermitteln und Speichern der Abweichungen (102) sowie zum Ermitteln des jeweils aktuellen Korrekturwerts (K, 103) und eine Kompensationskomponente (SCC) zum Ermitteln der kompensierten Stellgröße (SGcomp, 104) umfasst werden.

8. Verfahren nach Anspruch 6 oder Anspruch 7, ***dadurch gekennzeichnet, dass*** das Analysemodul (AM) als digitale Schaltung unter Verwendung eines Mikrokontrollers realisiert wird.

9. Verfahren nach einem der vorangegangenen Ansprüche, ***dadurch gekennzeichnet, dass*** als Stellgröße (SG), welche von der Reglereinheit (RE) zur Verfügung gestellt wird, ein Tastverhältnis des zumindest einen Schaltelements verwendet wird.

10. Verfahren nach einem der vorangegangenen Ansprüche, ***dadurch gekennzeichnet, dass*** das Steuersignal (S) für das zumindest eine Schaltelement des Gleichspannungswandlers (DC) aus der kompensierten Stellgröße (SGcomp) abgeleitet wird (105).

11. Verfahren nach einem der vorgegangenen Ansprüche, ***dadurch gekennzeichnet, dass*** als Reglereinheit (RE) zur Regelung der Ausgangspannung (Ua) des Gleichspannungswandler (DC) ein Spannungsregler mit einer unterlagerten Stromregelung verwendet wird.
